# EUROPEAN PATENT SPECIFICATION

(11) **EP 4 179 024 B1**
(45) Date of publication and mention of the grant of the patent: **04.06.2025**
(21) Application number: 21837015.3
(22) Date of filing: 02.07.2021
(51) Int. Cl.: C08L 63/00, C09D 163/00, C09J 163/00, C08F 2/50, C08F 283/01, C08G 59/24, C08G 65/18, C09D 4/06

(54) **A RADIATION CURABLE COMPOSITION COMPRISING A BIOBASED REACTIVE DILUENT**
STRAHLUNGSHÄRTBARE ZUSAMMENSETZUNG MIT EINEM REAKTIVEN VERDÜNNUNGSMITTEL AUF BIOBASIS
COMPOSITION DURCISSABLE PAR RAYONNEMENT COMPRENANT UN DILUANT RÉACTIF D'ORIGINE BIOLOGIQUE

(30) Priority: 08.07.2020 SE 2030222
(43) Date of publication of application: 17.05.2023
(73) Proprietor: Perstorp AB, 284 80 Perstorp (SE)
(72) Inventor: LUNDMARK, Stefan, 263 95 Farhult (SE); JAMES, David, 224 67 Lund (SE); MAURIN, Vanessa, 284 38 Perstorp (SE); WENNERBERG, Pia, 224 67 Lund (SE); ALMSTRÖM, Adam, 24133 Eslöv (SE)
(74) Representative: Hoffmann Eitle
(86) International application number: PCT/SE2021/050673
(87) International publication number: WO 2022/010403

(56) References cited:
- EP-A1- 1 172 391
- WO-A1-03/093901
- WO-A1-2006/098676
- WO-A1-2006/118532
- WO-A1-2017/059222
- WO-A1-2017/131563
- WO-A1-2019/045626
- WO-A1-2019/125296
- WO-A1-99/50711

## Description

### FIELD OF THE INVENTION

The present invention refers to a radiation curing composition, comprising 51-100 wt% of a cationic curable resin, further comprising a cycloaliphatic epoxide, at least one vinyl compound, selected from the group consisting of methyl vinyl glycolate (MVG), vinyl glycolic acid (VGA) and an ester or polyester of MVG or of VGA, and a cationic photoinitiator. The cationic curable resin may also comprise a monooxetane compound, having one oxetane group, and/or a polyoxetane compound, having at least two oxetane groups. The present invention further refers to a coating, ink or adhesive comprising the radiation curable composition of the present invention and to a three-dimensional object obtained through 3D printing using the radiation curable composition of the present invention.

### BACKGROUND OF THE INVENTION

Radiation curable formulations are based on monomers, oligomers, photoinitiators, and additives and they are cross-linked by either by electromagnetic radiation (ultraviolet (UV) or visible light) or by highly accelerated electrons (electron beam (EB)). Visible light or UV light, coming from mercury lamps, xenon lamps or light emitting diodes (LEDs), or EB energy starts a photochemical reaction. Radicals or cations, formed from the reaction of the radiation with the photoinitiator, act as catalysts to solidify, dry, harden, polymerize, or cross-link the liquid formulation. Radiation curable compositions are based on a technology that cure through a free-radical cure mechanism and usually involves acrylates, or through a cationic cure mechanism and usually involves cycloaliphatic epoxides. An overview of both technologies can be found in J. Coatings Technology, "A Radiation-Cure Primer," Vol. 69, No. 866, p. 29, 1997.

Radiation curing with UV light was first commercially successful in the wood and furniture industries. Today, UV curing is used in many different industries, including coatings, varnishes, inks, electronics, adhesives and 3D printing. UV cured coatings, inks and adhesives have become very important mainly due to environmental advantages, unique physical properties and production efficiency. UV curable compositions have a very low level of volatile organic compounds (VOC), since they do not need any organic solvents that generate VOC emissions, which is very important in order to meet environmental regulations that limit emissions and control air quality. Due to this reason UV coating systems is a fast growing sector as replacement for solventborne systems. UV curing often makes products more attractive and durable in providing exceptional stain, abrasion and solvent resistance together with a superior toughness and high gloss. Products can be made to meet market specific needs, such as optical fibers, photoimaging of printing plates, wood and concrete floor refinishing, automotive parts and flexible food packaging. Moreover, the development of specialized UV lamp systems allows for 3D curing, mainly in the manufacture of prototypes for medical and electromechanical systems and small-scale production. The UV curing process greatly reduces drying times and improves production efficiency and provides pollution reduction.

Although pollution is reduced for radiation cured coatings, another environmental issue persists. Petrochemical-based raw materials are still central in the coating industry. Due to the increasing concern about depletion of fossil reserves and greenhouse gas emissions, a range of natural polymers and biobased plastics are being developed in an attempt to replace petroleumbased polymeric materials. It is a real challenge of today to develop a more sustainable chemical industry where fossil-based resources are replaced by renewable alternatives wherever possible. The current chemical industry has been optimized for the use of fossil-based chemicals as its primary source of building blocks, but now there is a shift towards renewable bioderived building blocks. An example of a biobased platform chemical that has shown to be able to replace unsaturated compounds, like conventional acrylic and vinyl fossil based monomers, is methyl vinyl glycolate (methyl 2-hydroxybut-3-enoate, MVG). MVG is available by zeolite catalysed degradation of mono- and disaccharides, like described in EP 2184270, and has the ability to cure by a free-radical mechanism and form a film upon curing in a free-radical curable composition, as illustrated by examples in WO 2017/131563, and react as a reactive diluent in the free-radical resin of a photopolymer composition for additive manufacturing, as illustrated by examples in WO 2019/125296. MVG has also shown to have beneficial use in UV curable polyurethane acrylate system, as disclosed in WO 2019/045626.

Several attempts have been made in the prior art to increase the amount of biobased material in radiation curable resins in order to develop so called green UV-curing resins and coatings. The green part is however seldom the UV-functional part. Being able to replace the acrylate in a free-radical curing system with a safer and renewable alternative, like MVG, is a great success. There is however still a desire to increase the renewable content also in cationic curing systems. Cationic curing have some advantages over radically induced curing, particularly the absence of oxygen inhibition, "dark cure reaction" i.e. continued curing after UV exposure, low shrinkage, higher operating temperatures, good adhesion, high flexibility and improved coating properties of the cured materials. Moreover, the monomers active in cationic curing are generally less toxic and irritant than acrylates and methacrylates, which are widely used in radical photopolymerization.

Radiation curing compositions used in coating systems need to have a combination of desirable properties. Preferably such compositions should have a smooth surface, little or no surface tackiness after curing, a combination of high temperature resistance, low humidity sensitivity and good mechanical properties such as good adhesion to the substrate, high strength, high impact resistance along with high flexibility. A competitive radiation curing composition further needs to cure fast and thoroughly, be compatible with the desired post processing and not yellow after a while. There is a need on the market for radiation curing compositions with a higher degree of renewable content, but it is a real challenge to manage to combine a higher degree of renewable content with equally or improved physical properties compared to existing radiation curing compositions.

It is an object of the present invention to provide a cationic or hybrid radiation curable composition that has the combination of an increased renewable content and the ability to produce a coating having excellent surface properties and good mechanical properties, including high hardness and chemical resistance, which can be used in various applications.

Cycloaliphatic epoxides are short on the market and there is a desire to find a suitable and safer substitute. Another object of the present invention is therefore to provide a way to lower the amount of cycloaliphatic epoxides needed in a cationic radiation curable composition, without impairing the curing and/or the mechanical properties of the cured object.

There is still a need to increase the efficiency of coating applications and the present invention also seeks to improve the UV-curing efficiency of UV-curable formulations which will reduce the amount of UV light dosage required for curing.

### SUMMARY OF THE INVENTION

The present invention refers to a radiation curable composition comprising 51-100 wt% of a cationic curable resin, further comprising a cycloaliphatic epoxide, at least one vinyl compound, selected from the group consisting of methyl vinyl glycolate (MVG), vinyl glycolic acid (VGA) and an ester or polyester of MVG or of VGA, and a cationic photoinitiator. The cationic curable resin may also comprise a monooxetane compound, having one oxetane group, and/or a polyoxetane compound, having at least two oxetane groups. The radiation curable composition of the present invention may optionally comprise 0-49 wt% of a free-radical curable resin, further comprising a (meth)acrylate monomer or oligomer, and a free-radical photoinitiator. The weight percent is based on the total weight of the radiation curable composition.

It has earlier been shown that MVG has the ability to cure by a free-radical mechanism. It has however now surprisingly been found that MVG also has the ability to cure by a cationic mechanism. UV-curable compositions comprising the cationic curable resin of the present invention has been found to provide coatings with really good film forming properties and there is no need to have a silicon additive to enhance the coating surface. The cationic curable resin of the present invention also improves coating properties in terms of hardness and chemical resistance. The high reactivity of the vinyl compound in cationic UV-curing results in a quick cure and a low radiation energy needed to cure the material, but there is also a risk of polymerization in a cationic UV formulation. This property might however be beneficial in a two component system.

In addition to enhancing surface properties and improving mechanical properties of a coating, the addition of the vinyl compound also lowers the amount of cycloaliphatic epoxide needed in the cationic curable resin of the radiation curable composition and contributes to a higher amount of biobased content, i.e. provides a more renewable coating.

The radiation curable composition of the present invention can either be a pure cationic composition, comprising only a cationic curable resin or a hybrid composition, comprising both a cationic curable resin and a free-radical curable resin. The radiation curable composition of the present invention is preferably used in coatings, but could advantageously also be used for producing inks, three-dimensional objects and adhesives, providing excellent mechanical properties. The present invention therefore also refers to a coating, ink or adhesive comprising the radiation curable composition of the present invention and to a three-dimensional object obtained through 3D printing using the radiation curable composition of the present invention.

### DETAILED DESCRIPTION OF THE INVENTION

The present invention refers to a radiation curable composition comprising:
a) 51-100 wt% of a cationic curable resin, further comprising
   a1) a cycloaliphatic epoxide,
   a2) at least one vinyl compound, selected from the group consisting of methyl vinyl glycolate (MVG), vinyl glycolic acid (VGA) and an ester or polyester of MVG or of VGA, and
   a3) a cationic photoinitiator,
      and optionally
   a4) a monooxetane compound, having one oxetane group, and/or
   a5) a polyoxetane compound, having at least two oxetane groups,
   and optionally
b) 0-49 wt% of a free-radical curable resin, further comprising
   b1) a (meth)acrylate monomer or oligomer, and
   b2) a free-radical photoinitiator,
wherein the weight percent is based on the total weight of the radiation curable composition.

It has surprisingly been found that the biobased vinyl compound (a2) in the radiation curable composition of the present invention not only significantly improves the environmental footprint but also enhances the mechanical properties of the cured material.

MVG is, as described earlier, available by zeolite catalysed degradation of mono- and disaccharides, i.e. by sugar cracking. The various sugars that can be used as feed for the production of MVG may be derived from 2^{nd} generation biomass like corn cobs. MVG is an α-hydroxy C4-ester, a small molecule with a simple structure that possesses several functional groups

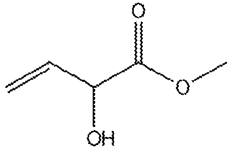

MVG seems promising as a good renewable platform molecule, but it is a rather new product with unexplored potential. Although possessing a vinyl side chain, an allylic alcohol and a methyl ester, the MVG molecule has shown to be rather unreactive. A lot of effort has for instance been made in trying to polymerize MVG, but without success. It has however now surprisingly been found that MVG really promotes reactivity in cationic curing. MVG has the unique ability to act as a reactive diluent both in a cationic resin and in a free-radical resin. The reactivity of MVG is however higher in cationic curing than in free-radical curing.

The radiation curable composition of the invention preferably comprises 60-100 wt% of said cationic curable resin and optionally 0-40 wt% of said free-radical curable resin. In another preferred embodiment the radiation curable composition of the invention comprises 80-100 wt% of said cationic curable resin and optionally 0-20 wt% of said free-radical curable resin.

The cationic curable resin preferably comprises 20-85 wt% of said cycloaliphatic epoxide a1), 10-50 wt% of said vinyl compound a2), 2-5 wt% of said cationic photoinitiator a3), 0-20 wt% of said monooxetane a4) and 0-30 wt% of said polyoxetane a5). In another preferred embodiment of the present invention the cationic curable resin comprises 20-60 wt% of said cycloaliphatic epoxide a1), 15-40 wt% of said vinyl compound a2), 2-5 wt% of said cationic photoinitiator a3), 0-20 wt% of said monooxetane a4) and 0-30 wt% of said polyoxetane a5).

In yet another preferred embodiment of the present invention the cationic curable resin comprises 70-80 wt% of said cycloaliphatic epoxide a1), 15-25 wt% of said vinyl compound a2) and 2-5 wt% of said cationic photoinitiator a3). In a further preferred embodiment the cationic curable resin of the present invention comprises 20-30 wt% of said cycloaliphatic epoxide a1), 15-35 wt% of said vinyl compound a2), 2-5 wt% of said cationic photoinitiator a3), 10-20 wt% of said monooxetane a4) and 20-30 wt% of said polyoxetane a5).

The cycloaliphatic epoxide a1) is preferably a 4-epoxycyclohexylmethyl-3,4-epoxycyclohexane carboxylate, a 3,4-epoxy-1-methyl-cyclohexyl methyl-3,4-epoxy-1-methylcyclohexane carboxylate, a 6-methyl-3,4-epoxycyclohexymethyl-6-methyl-3,4-epoxy-cyclohexane carboxylate, a 3,4-epoxy-3-methylcyclohexylmethyl-3,4-epoxy-3-methylcyclohexane carboxylate and/or a 3,4-epoxy-5-methylcyclohexylmethyl-3,4-epoxy-5-methylcyclohexane carboxylate.

In a preferred embodiment of the present invention said vinyl compound a2) is MVG.

In another preferred embodiment of the present invention said vinyl compound a2) is an ester or polyester of MVG, obtained by reacting MVG with an alcohol, a diol, a polyol and/or an acid or an anhydride and/or a prepolyester with pending hydroxyl or acid groups. Said ester or polyester is either formed through trans esterification with an alcohol, a diol and/or a polyol, or through direct esterification with an acid or anhydride. One possibility is to form a prepolyester by reacting an alcohol, a diol or a polyol with an acid in a first step and in a second step graft MVG on the obtained prepolyester, either through transesterification with the methyl ester group of MVG or through direct esterification with the hydroxyl group of MVG. Said prepolyester will have pending hydroxyl groups or pending acid groups, depending on whether the prepolyester has been formed in excess of the alcohol, diol or polyol or the acid. Suitable acids for forming an ester or polyester of MVG is adipic acid and/or succinic acid. A suitable anhydride for forming an ester or polyester of MVG is succinic anhydride. In this context the term acid is referring to mono-, di- and/or polyacids.

In yet another preferred embodiment of the present invention said cationic curable resin comprises two vinyl compounds a2). These two vinyl compounds are preferably MVG and an ester or polyester of MVG. One acts like a reactive diluent (MVG) and the other one acts like a cationic curable oligomer (MVG polyester) substituting a part of the cycloaliphatic epoxy monomer. The benefit with this composition is the combination of a safer and more renewable composition that has the ability to produce a coating having excellent surface properties. The amount of cycloaliphatic epoxide is decreased in favour for the safer and partly biobased MVG polyester and the reactive diluent MVG is biobased. Both MVG and the MVG polyester contribute to great coating surface properties.

In an embodiment of the present invention said vinyl compound a2) is VGA. VGA (vinyl glycolic acid, 2-hydroxy-3-butenoic acid), the acid version of MVG, is derived from the same sugar cracking process as MVG. VGA has surprisingly also shown to possess similar beneficial properties as MVG in cationic curing. VGA works very well as a reactive diluent and provides coatings with smooth surfaces and good mechanical properties.

In another preferred embodiment of the present invention said vinyl compound a2) is an ester or polyester of VGA, obtained by reacting an alcohol, a diol and/or a polyol with VGA.

Suitable alcohols for forming an ester of MVG or VGA are 2-ethyl-heptanol, 2-propyl-heptanol, 5-hydroxy-1,3-dioxane, 5-hydroxy-methyl-1,3-dioxane and/or 5-hydroxyethyl-1,3-dioxane.

Suitable diols for forming a diester of MVG or VGA are butanediol, propanediol, heptanediol, pentanediol, hexanediol, dipropylene glycol, triethylene glycol, cyclohexane-dimethanol, 2-ethyl-2-butyl-1,3-propanediol, neopentyl glycol, 5,5-dihydroxymethyl-1,3-dioxane, xylylene glycol, pentaerythitol spiroglycol, bisphenol A, bisphenol F, a caprolactone diol and/or a polycarbonate diol.

Suitable polyols for forming a polyester of MVG or VGA are glycerol, trimethylolethane, trimethylolpropane, trimethylolbutane, xylylene triol, a caprolactone triol, a polycarbonate triol, pentaerythritol, di-trimethylolethane, di-trimethylolpropane, ditrimethylol-butane, a caprolactone tetrol, a polypropylene glycol, a polycarbonate tetrol, anhydroennea-heptitol, xylitol, a caprolactone pentol, a polycarbonate pentol, di-pentaerythritol, sorbitol, mannitol, a caprolactone hexol and/or a polycarbonate hexol.

The alcohols, diols and/or polyols mentioned above, as suitable for forming an ester or polyester with MVG or VGA, could preferably be alkoxylated, such as ethoxylated, propoxylated and/or butoxylated. Most preferably the diols and/or polyols for forming a diester and/or a polyester with MVG or VGA are hexanediol, 1,3-propanediol, trimethylolpropane, ethoxylated trimethylolpropane, pentaerythritol and /or di-pentaerythritol. The ester or polyester of MVG or of VGA has preferably a renewable content of 50-100 wt%.

The cationic photoinitiator a3) in the radiation curable composition of the present invention may be chosen from any commonly used to initiate cationic radiation curing. The cationic photoinitiator is preferably an iodonium, a sulphonium, a halonium, a sulphoxonium, a diazonium and/or a metallocene salt.

In an embodiment of the present invention the radiation curable composition of the present invention comprises a monooxetane a4) and/or a polyoxetane a5). Examples of preferred monooxetanes a4) are 3-ethyl-3-hydroxymethyloxetane, 3-(meth)allyl-oxymethyl-3-ethyloxetane, (3-ethyl-3-oxetanylmethoxy)-methylbenzene, 4-fluoro-[1-(3-ethyl-3-oxetanylmethoxy)methyl]benzene, 4-methoxy-[1-(3-ethyl-3-oxetanylmethoxy)methyl]-benzene, [1-(3-ethyl-3-oxetanylmethoxy)ethyl]phenyl ether, isobutoxymethyl(3-ethyl-3-oxetanylmethyl)-ether, isobomyloxyethyl(3-ethyl-3-oxetanylmethyl)- ether, isobomyl(3-ethyl-3-oxetanylmethyl)ether, 2-ethylhexyl(3-ethyl-3-oxetanylmethyl)ether, ethyldiethylene glycol-(3-ethyl-3-oxetanylmethyl)ether, dicyclopentadiene(3-ethyl-3-oxetanyl-methyl)ether, dicyclopentenyloxyethyl(3-ethyl-3-oxetanylmethyl)ether, dicyclopentenyl(3-ethyl-3-oxetanyl-methyl)ether, tetrahydrofurfuryl(3-ethyl-3-oxetanylmethyl)ether, tetrabromophenyl(3-ethyl-3-oxetanylmethyl)ether, 2-tetrabromophenoxyethyl(3-ethyl-3-oxetanylmethyl)ether, tribromo-phenyl(3-ethyl-3-oxetanylmethyl)ether, 2-tribromophenoxyethyl(3-ethyl-3-oxetanylmethyl)-ether, 2-hydroxyethyl(3-ethyl-3-oxetanylmethyl)ether, 2-hydroxypropyl(3-ethyl-3-oxetanylmethyl)-ether, butoxyethyl(3-ethyl-3-oxetanylmethyl)ether, pentachlorophenyl(3-ethyl-3-oxetanylmethyl)ether, pentabromophenyl(3-ethyl-3-oxetanylmethyl)ether, bornyl(3-ethyl-3-oxetanylmethyl)ether, and the like. Other examples of oxetane compounds suitable for use include trimethylene oxide, 3,3-dimethyloxetane, 3,3-dichloromethyloxetane, 3,3-[1,4- phenylenebis(methylene-oxymethylene)]-bis(3-ethyloxetane), 3-ethyl-3-hydroxymethyl-oxetane, and bis-[(1-ethyl(3-oxetanyl)methyl)]ether.

Suitable polyoxetane compounds a5) which may be used in the present invention include: 3,7-bis(3-oxetanyl)-5-oxa-nonane, 3,3'-(1,3-(2-methylenyl)propanediyl-bis(oxymethylene))-bis-(3-ethyloxetane), 1,4-bis[(3-ethyl-3-oxetanyl- methoxy)methyl]-benzene, 1,2-bis[(3-ethyl-3-oxetanylmethoxy)methyl]ethane, 1,3-bis[(3-ethyl-3-oxetanyl-methoxy)methy]propane, ethylene glycol bis(3-ethyl-3-oxetanylmethyl)ether, dicyclopentenyl bis(3-ethyl-3oxetanyl-methyl)ether, triethylene glycol bis(3-ethyl-3- oxetanylmethyl)ether, tetraethylene glycol bis(3-ethyl-3-oxetanylmethyl)ether, tricyclodecanediyldimethylene(3-ethyl-3-oxetanylmethyl)-ether, trimethylolpropane tris(3-ethyl-3-oxetanylmethyl)ether, 1,4-bis(3-ethyl-3-oxetanyl-methoxy)butane, 1,6-bis(3-ethyl-3-oxetanylmethoxy)hexane, pentaerythritol tris(3-ethyl-3-oxetanylmethyl)ether, pentaerythritol tetrakis(3-ethyl-3-oxetanylmethyl)ether, polyethylene glycol bis(3-ethyl-3-oxetanylmethyl)ether, dipentaerythritol hexakis(3-ethyl-3-oxetanyl-methyl)ether, dipentaerythritol pentakis(3-ethyl-3-oxetanylmethyl)ether, dipentaerythritol tetrakis(3-ethyl-3-oxetanyl-methyl)ether, caprolactone-modified dipentaerythritol hexakis(3-ethyl-3-oxetanylmethyl)ether, caprolactone-modified dipentaerythritol pentakis(3-ethyl-3-oxetanylmethyl)ether, ditrimethylolpropane tetrakis(3-ethyl-3-oxetanylmethyl)ether, ethylene oxide modified bisphenol-A-bis(3- ethyl-3-oxetanylmethyl)ether, propylene oxide modified bisphenol-A-bis(3-ethyl-3-oxetanylmethyl)ether, ethylene oxide modified hydrogenated bisphenol-A-bis(3-ethyl-3-oxetanylmethyl)ether, propylene oxide modified hydrogenated bisphenol-A-bis(3-ethyl-3-oxetanylmethyl)ether, ethylene oxide modified bisphenol-F-(3-ethyl-3-oxetanyl-methyl)ether, and the like.

The polyoxetane compound a5) has at least two oxetane groups, preferably 1-4, and most preferably 2 oxetane groups. In particularly preferred embodiments of the present invention the monooxetane a4) is 3-ethyl-3-hydroxymethyl-oxetane (e.g. Curalite^{™}Ox from Perstorp AB) and the polyoxetane a5) is 3,3'-oxydimethylene-bis(3-ethyl)-oxetane (e.g. Curalite^{™}OxPlus from Perstorp AB).

The cationic curable resin of the present invention may additionally comprise a cationic photosensitiser, to increase the sensitivity of the cationic radiation curing composition by increasing the reactivity of the cationic photoinitiator and thereby ensuring efficient light absorption. The photosensitiser is present in an amount of 0-1% by weight, preferably 0.01-0.5% by weight based on the total weight of the cationic curing resin. The nature of a suitable photosensitiser depends on the photoinitiator and its capability to absorb light. Iodonium salts for example usually need help from a sensitiser, preferably anthracene or thioxanthone. Commonly used photosensitisers are for instance pyrene, n-phenyl glycine, anthracene and thioxanthone and their derivatives, such as l-chloro-4-propoxy-thioxanthone. In a preferred embodiment of the present invention the cationic photosensitiser is 1,3-di[[α-[1-chloro-9-oxo-9H-thioxanthen-4-yl)oxy]acetylpoly[oxy(1-methylethylene)]]oxy]-2,2-bis[[α-[1-cloro-9-oxo-9H-thioxanthen-4-yl)oxy]acetylpoly[oxy(1-methylethylene)]]oxymethyl-propane.

The radiation curable composition of the present invention is preferably a cationic radiation curable composition. The cationic curable resin a) of the present invention may however suitably be used together with a free-radical curable resin b) in a hybrid radiation curable composition of the present invention.

Acrylates polymerize radically, while epoxides polymerize cationically. In the presence of each other during the curing process, an interpenetrating polymer network (IPN) of the two polymers is formed, a polymer blend rather than a copolymer. Although the acrylate and epoxide react independently they affect each other physically during the curing process. As a result, the acrylate polymerizes more extensively in the presence of epoxy and the acrylate is less sensitive to oxygen. The acrylate/epoxide hybrid system requires a shorter exposure time to be cured than either of the two taken separately. The acrylate and the epoxide benefit from each other by a synergistic effect. Increasing the acrylate content increases the cure speed but decreases the adhesion characteristics and increases the brittleness, while increasing the epoxy content reduces the shrinkage of curing, allows significant dark curing and improves the adhesion and the flexibility, but decreases the cure speed. With a radiation curing composition according to the present invention it is now possible to combine high speed curing with all of the beneficial properties of a cationic radiation curing composition.

The (meth)acrylate monomer b1) in the free-radical curable resin b) of the present invention is suitably hexanediol di(meth)acrylate, tripropylene glycol di(meth)acrylate, trimethylolpropane tri(meth)acrylate, pentaeryhtritol tri(meth)acrylate, pentaeryhtritol tetra(meth)acrylate, dipentaerythritol penta(meth)acrylate, dipentaerythritol hexa(meth)acrylate, alkylene oxide modified glycerol tri(meth)acrylate, alkylene oxide modified neopentyl glycol di(meth)acrylate, alkylene oxide modified trimethylolpropane tri(meth)acrylate, alkylene oxide modified pentaeryhtritol tetra(meth)-acrylate and/or ditrimethylol-propane tetra(meth)acrylate. Most preferably the (meth)acrylate monomer b1) is propoxylated glycerol triacrylate, ethoxylated trimethylolpropane triacrylate, pentaerythritol tetraacrylate and/or dipentaerythritol hexaacrylate.

The (meth)acrylate oligomer b1) in the free-radical curable resin b) of the present invention is suitably an epoxy (meth)acrylate, a polyester (meth)acrylate, a polyether (meth)acrylate, a melamine (meth)acrylate, a polycarbonate (meth)acrylate, a dendritic (meth)acrylate and/or an unsaturated polyester. In an embodiment of the present invention the (meth)acrylate oligomer b1) is tripropylene glycol diacrylate (TPGDA).

The free-radical curable resin of the present invention comprises 0-4 wt% of a free-radical photoinitiator b2). The free radical photoinitiator may be chosen from those commonly used to initiate radical cationic radiation curing. Preferred free radical photoinitiators are benzoin or a benzoin derivative, acetophenone, benzil or a benzil ketal, an anthraquinone, a triphenylphosphine oxide, a benzoylphosphine oxide, bisacylphosphine oxide, a benzophenone, a thioxanthone, a xanthone, an acridine derivative, aphenazene derivative, a quinoxaline derivative, 1-phenyl-1,2- propanedione 2-O-benzoyl oxime, 4-(2-hydroxyethoxy)phenyl-(2-propyl)ketone, 1-aminophenyl ketone and/or 1-hydroxy phenyl ketone.

The radiation curable composition of the present invention may additionally comprise a thermal initiator selected from the group of benzoyl peroxide, dicumyl peroxide and azobisisobutyronitrile (AIBN). The thermal initiator is chosen very carefully to avoid thermal degradation and the most preferred thermal initiator is benzoyl peroxide. A thermal initiator is especially added when the composition is used in additive manufacturing, in order to be able to perform a dual cure post-treatment of the printed three-dimensional object. Dual cure is a combination of UV curing and thermal curing. The effect is the same whether the UV irradiation is followed by thermal treatment or the thermal treatment is followed by UV irradiation.

Additionally, the radiation curable composition of the present invention may include other components, for example, matting agents, flow agents (also called levelling agents), rheology modifying agents, dyes, pigments, stabilizers, modifiers, tougheners, antifoaming agents, thickening agents, flame retardants, antioxidants and/or fillers.

Most preferably the radiation curable composition of the present invention is a UV curable composition, but the composition of the present invention could also be an IR curable or an EB curable composition.

The present invention may also comprise graphene, present in an amount of 0-5 wt% based on the total weight of the radiation curable composition, in order to increase the strength of a cured coating based on the composition of the present invention. Graphene is preferably added as graphene oxide particles dispersed in a solvent.

The radiation curable composition of the present invention is preferably used in coatings, like wood coatings, metal coatings, plastic coatings, textile coatings and paper coatings, but could advantageously also be used in flexographic and digital inks, 3D printing, graphic arts, adhesives, medical and dental applications and devices, absorbents, sanitary articles, packaging, electronic and electric applications and devices, and/or optical application and devices, providing excellent mechanical properties.

The present invention also refers to a coating comprising the radiation curable composition of the present invention. Important properties of a radiation curable coating are adhesion to the substrate, strength and flexibility. The composition of the present invention results in a radiation curable composition with a low viscosity and with the ability to yield a coating with excellent surface properties and good mechanical properties, like hardness and chemical resistance.

The radiation curable composition of the present invention can be used in many applications such as dual cure coating compositions. A good surface property requires a high crosslinking density of the coating. However, a high crosslinking density often results in a low stretching ability and the coating has a tendency towards cracking during the forming. This conflict between the required high crosslinking density and the desired high degree of stretch be resolved in different ways, for example by carrying out curing in two steps, before and after forming. A radiation-induced crosslinking reaction is particularly suitable for post-curing. The radiation curable composition of the present invention comprising a vinyl compound having both an ethylenically unsaturated group and a hydroxyl group, could suitably be used in dual cure systems. In addition to photopolymerization, the composition can also rely on a curing mechanism independent of irradiation, for example a crosslinking reaction between the hydroxyl groups in the composition of the present invention and polyisocyanates. An application area for the dual curing coating mechanism is for example the curing of highly pigmented coatings where the UV light cannot penetrate deep enough in the coating.

Monomers in radiation curable coatings act similar to solvents in solvent-borne paints and oligomers have a similar function to that of binders in solvent-borne paints and water-borne paints. Photoinitiators absorb light (UV or visible) and initiate cross-linking reactions, they are added in concentrations of 1-10%. Additives are used to modify and improve various functions of radiation curable coatings: pigments, fillers for viscosity control, wetting agents, defoamers and other additives for paints.

The present invention also refers to high renewable content resins offering good adhesion and high flexibility. It has shown that formulations comprising a polyester of MVG work as an efficient pigment grinding resin with good grinding and good coverage power. Formulations comprising a polyester of MVG can easily be mixed with acrylates. It has been shown that having a OH functionality is necessary for the cationic crosslinking of MVG polyesters. A MVG polyester acts as a curable oligomer in a cationic curable resin and has the ability to partly replace the cycloaliphatic epoxy monomer. An MVG polyester is both safer and greener that a cycloaliphatic epoxide and thus lowers the carbon footprint of a radiation curable composition.

The present invention also refers to an ink comprising the radiation curable composition. Printing with radiation curable inks provides the ability to print on a very wide variety of substrates such as plastics, paper, canvas, glass, metal, foam boards, tile, films, and many other materials. There are several different kinds of UV inks, like offset inks, waterless inks, flexo inks, letterpress inks and varnishes. UV curable inks comprise pigments in addition to the radiation curable composition of the present invention. The pigments provide the colour. The pigment dispersion is a critical component of a UV ink composition, as the particles need to be ground to less than 200 nanometers to fully develop colour, with each nano particle coated to prevent agglomeration and potentially blocking an inkjet nozzle that would compromise jetting accuracy, resulting in unacceptable print quality. Essentially all inkjet inks need to be nanosized to jet reliably, and provide precise drop placement to optimize print quality. Another important property of ink compositions is the viscosity, that is essential to jetting reliability.

In another aspect the present invention refers to a three-dimensional object obtained through additive manufacturing using the radiation curable composition of the present invention. The presence of MVG in additive manufacturing formulations has shown to decrease the viscosity of the photopolymer composition and contribute to a great build-up of the three-dimensional objects, flexible printed objects with really fine details, low colour and enhanced mechanical properties, like tensile strength and elongation at break. MVG is suitably added in formulations for additive manufacturing in an amount of 0-5% by weight, more preferably 0-2.5% by weight, based on the total weight of the photopolymer composition.

In the application of additive manufacturing it has been noticed that the addition of pentaerythritol (meth)acrylate and dipentaerythritol (meth)acrylate has an improving effect on an additive manufacturing process. The build-up of the printing object is enhanced, the post-curing time is lowered and the details of the printed object are finer when certain amounts of pentaerythritol (meth)acrylate (e.g. pentaerythritol tetraacrylate) and dipentaerythritol (meth)acrylate (e.g. dipentaerythritol hexaacrylate) are present in the formulation.

The presence of a mixture of monooxetane and polyoxetane in the composition has shown to provide a great impact resistance of a cured three-dimensional object produced through SLA, DLP or LCD printing when the radiation curable composition of the invention is used in additive manufacturing.

The radiation curable composition of the present invention is further highly suitable for adhesives. Therefore the present invention also refers to an adhesive comprising the radiation curable composition of the present invention. Adhesives are formulated differently compared to coatings or inks. The main differences are lower degree of functionality on oligomers and monomers, lower degree of crosslink, lower cure speed, hardly any pigmented formulations and the film thickness is often higher than for most coatings and inks.

The present invention is further explained with reference to enclosed embodiment Examples, which are to be construed as illustrative and not limiting in any way.

### EXAMPLES

Example 1 and 2 are comparative examples and Example 3, 4 and 5 illustrates embodiments of the present invention.

**Example 1** demonstrates a radiation curable composition only comprising a cycloaliphatic epoxide and a photoinitiator.

**Example 2** demonstrates a radiation curable composition additionally comprising a monooxetane as reactive diluent.

**Example 3** demonstrates a radiation curable composition comprising MVG instead of the monooxetane as reactive diluent.

**Example 4** demonstrates a radiation curable composition comprising MVG, a monooxetane and a polyoxetane as reactive diluents.

**Example 5** demonstrates a radiation curable composition comprising a polyester of MVG and a monooxetane as reactive diluents.

**Table 1** describes the components used in Example 1-5.

**Table 2** describes the radiation curable compositions of Example 1-5 and their performance in coating evaluations.

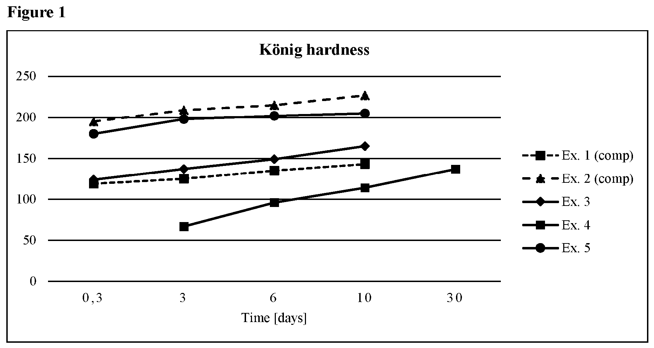

**Figure 1** illustrates the König hardness of cured coatings of the compositions of Example 1-5.

**Table 1**

| **Trade Name** | **CAS No** | **Chemical Name** | **Function** | **Supplier** |
|---|---|---|---|---|
| MVG | 5837-73-0 | Methyl 2-hydroxy-3-butenoate; Methyl vinyl glycolate | Reactive diluent | Haldor Topsoe |
| MVG polyester | - | A polyester of MVG and a prepolyester of Polyol 3610 and succinic acid | Cationic curable oligomer | Perstorp AB |
| UviCure S105 | 2386-87-0 | 3,4-Epoxycyclohexylmethyl 3',4'-epoxycyclohexane carboxylate; ECC | Cationic curable oligomer (cycloaliphatic epoxy monomer) | Lambson |
| Curalite^{™} Ox | 3047-32-3 | 3-Ethyl-3-hydroxymethyl-oxetane; monooxetane; TMPO | Reactive diluent | Perstorp AB |
| Curalite^{™} OxPlus | 18934-00-4 | 3,3'-Oxydimethylene-bis(3-ethyl)-oxetane; dioxetane; di-TMPO | Reactive diluent | Perstorp AB |
| Irgacure 250 | 344562-80-7 | 4-Isobutylphenyl-p-tolyliodonium hexafluorophosphate | Cationic photoinitiator | BASF |
| Polyol 3610 | 50586-59-9 | Ethoxylated propylidynetrimethanol | Trifunctional polyol | Perstorp AB |
| Succinic acid | 110-15-6 | Butanedioic acid | Difunctional acid | Sigma-Aldrich |
| Xylene | 1330-20-7 | Dimethylbenzene | Azeotropic fluid | Sigma-Aldrich |
| Stannous octoate | 301-10-0 | 2-Ethylhexanoic acid tin(2+) salt | Catalyst | Sigma-Aldrich |
| SnCl₄·5H₂O | 10026-06-9 | Tetrachlorostannane pentahydrate | Catalyst | Sigma-Aldrich |

### Synthesis of MVG polyester

A polyester of MVG to be used in Example 5 was synthesized according a two-step method where a prepolyester was formed in a first step by reacting a polyol with an acid and in a second step grafting MVG on to the obtained prepolyester through transesterification with the methyl ester group of MVG.

First a reaction vessel with a heating mantle was set up. A PTFE stirrer was inserted through the top to mix the material. Temperature was measured with a probe in the reaction liquid. A Dean Stark with attached cooler was mounted in order to capture boiled off reaction material (water, methanol) to measure how far the reaction has proceeded. A nitrogen inlet was inserted into the reaction liquid to help remove water or methanol.

Then 63 wt% of Polyol 3610, 20 wt% of succinic acid and 17 wt% of xylene were added to the reactor, whereafter very small amounts (about 0,004 wt%) of stannous octoate catalyst was added under stirring. The trifunctional Polyol 3610 is reacted with the difunctional succinic acid in order to create a larger molecule to attach MVG on in the next step. The ratio between polyol and acid is chosen so that the reaction can be completed without gelling and still leave some hydrogen groups free to attach MVG in the next step. The molar ratio of polyol to acid is about 1:0,75. This first step is conducted at 150 °C and since it is an esterification reaction water is formed. The status of the reaction is measured by the amount of water collected. When the reaction is completed, i.e. the produced water volume collected has approached the theoretical maximum of 1,5 moles water per 1 mol polyol (takes about 16 h), the azeotropic fluid xylene is removed and the acid value of the solution is measured. The acid value has to be below 5 mg KOH/g to be able to continue to the next step.

In the second step 52 wt% of MVG is added to the reactor together with a very small amount (about 0,007 wt%) of catalyst SnCl4· 5H2O and the reactor is heated to 130°C. In this step MVG is attached to the prepolyester through transesterification giving the polyester its UV-curing properties. In this reaction methanol instead of water is formed and the status of the reaction is measured by the amount of methanol collected. MVG is added in excess in an attempt to speed up the reaction which takes about 40 h. The molar ratio of polyol to MVG is about 1:1,5-3,5. When the reaction is completed, i.e. the produced methanol volume collected has approached the theoretical maximum of 1,5 moles methanol per 1 mol polyol, excess MVG is removed with vacuum at 80 to 100 °C.

**Table 2**

| **Composition** | | **Comparative Ex. 1** | **Comparative Ex. 2** | **Ex. 3** | **Ex. 4** | **Ex. 5** |
|---|---|---|---|---|---|---|
| UviCure S105 | | 96 | 76 | 76 | 26 | 56 |
| MVG | | 0 | 0 | 20 | 30 | 0 |
| MVG polyester | | 0 | 0 | 0 | 0 | 20 |
| Curalite^{™}Ox | | 0 | 20 | 0 | 15 | 20 |
| Curalite^{™}OxPlus | | 0 | 0 | 0 | 25 | 0 |
| Irgacure 250 | | 4 | 4 | 4 | 4 | 4 |
| | | | | | | |
| Total wt% | | 100 | 100 | 100 | 100 | 100 |
| | | | | | | |
| Viscosity at 23°C (mPa·s) | | 270 | 80 | 78 | 18 | 76 |
| | | | | | | |
| **Cured film** (1*5 m/min) | | | | | | |
| Film appearance on glass | | Acceptable | Acceptable | Good | Good, slightly hazy | Good |
| Film appearance on aluminum | | Acceptable | Good | Good | Good | Good |
| König hardness after 7 h | | 119 | 195 | 124 | - | 180 |
| | 3 days | 125 | 209 | 137 | 67 | 198 |
| | 6 days | 135 | 215 | 149 | 96 | 202 |
| | 10 days | 143 | 227 | 165 | 114 | 205 |
| | 30 days | - | - | - | 137 | - |
| MEK double rubs after 1 h | | 100 | 100 | 150 | 5 | 60 |
| | 3 h | 150 | 200 | 200* | 5 | 130 |
| | 5 h | 180 | - | 200* | - | 200 |
| | 3 days | 200 | - | 200 | 60 | - |
| | 10 days | - | - | - | 150 (200 with double UV dose) | 200 |
| Pencil hardness after 6 days | | 2H-3H | 2H-3H | 2H-3H | 2H-3H | 2H-3H |

| | | | | | | |
|---|---|---|---|---|---|---|
| *Some marks in the coating | | | | | | |

The cationic curable compositions of Example 1-5 in Table 2 were then prepared. The cationic curable components were blended and the photoinitiator was mixed into the formulation with a wooden stick and heated to 60-80°C (later tests have shown that heating is not always necessary to retrieve a good blend). Storing of the components were made in dark bottles to avoid activation of the photoinitiator.

Viscosity of the prepared compositions was measured on a TA rheometer (AR-G2, plate-plate 25 mm) using shear rate sweep up and down in the interval of 10-100 s⁻¹ at 23°C. The viscosity values presented in Table 2 are read at a shear rate of 30 s⁻¹ from shear sweep down.

The compositions of Example 1-5 were then applied with a thickness of 40 µm on glass plates and with a thickness of 12 µm on aluminium plates using a K-bar. After they had been applied to the substrates, the coatings were cured by UV radiation using an UV conveyor system equipped with a belt speed of 5 m/min and a fusion lamp (H bulb). Each film was cured in only one pass (total light exposure: 3 J/cm²; C=0,225, V=0,994, A=0,924, B=0,857 J/cm²). The coatings were then stored at 23°C and 50% relative humidity before the mechanical properties were tested. The film appearance of the coatings was observed and the result is disclosed in Table 2.

König hardness of the coatings on glass plates was measured according to ISO 1522, ASTM D4366, SS-EN ISO 1522. The results reported in Table 2 and Figure 1 are average values of three measurements.

Chemical resistance of the coatings on aluminium plates was measured by MEK double rubs according to ASTM D4752-98 and the results are presented in Table 2 and are average values of three measurements.

Pencil hardness of the coatings on glass plates was measured according to ISO 15184:1998 and the results are presented in Table 2.

The results of the measurements (Table 2) show that the addition of MVG to the cationic radiation curable composition substantially decreases the viscosity of the composition and suitably could be used as a reactive diluent. The addition of MVG further contributes to a great surface of the cured coatings. The surface of the coatings become very nice and smooth when MVG is present in the coating formulations and there is no need for any silicon additive in the formulations. MVG is almost as good reactive diluent as the commercial known Curalite^{™}Ox, a monooxetane (Example 2) and the surface properties of the coatings comprising MVG is much better than the coatings comprising only the monooxetane as reactive diluent.

MVG increases the reactiveness of the cationic curable compositions, which results in a quick cure and a low radiation energy needed to cure the coatings. If compared to the free-radical curable composition disclosed in WO 2017/131563, the compositions of the present invention only needed one pass under the UV lamp instead of 30 in order to cure properly, which saves both money and time. MVG tends to polymerise rather easy with the cycloaliphatic epoxide upon radiation, which provides a great cationic curing, but also induces a risk of unwanted polymerization that could cause storage problems.

The results of the measurements presented in Table 2 and Figure 1 also show that the hardness and the chemical resistance of the cured coatings is greatly improved by the addition of MVG to the cationic radiation curable composition.

The polyester of MVG works perfectly fine as a cationic curable oligomer in the radiation curable composition of the present invention, as can be seen from the results in Table 2 and Figure 1. The MVG polyester contributes with very good surface properties when applied on glass (which is the most difficult substrate to apply a good film on). Compared to the coating of the composition of Example 2, the hardness is slightly reduced with the addition of the MVG polyester, but still remains at a good level. Considering the improved surface of the cured coating and the fact that the cycloaliphatic epoxy monomer (UviCure S105) is substantially reduced, using the MVG polyester as a curable oligomer in a cationic curable resin is beneficial both from a coating perspective, a health perspective and a sustainable perspective.

## Claims

1. A radiation curable composition, **characterised in that** the composition comprises:
a) 51-100 wt% of a cationic curable resin, further comprising
a1) a cycloaliphatic epoxide,
a2) at least one vinyl compound, selected from the group consisting of methyl vinyl glycolate (MVG), vinyl glycolic acid (VGA) and an ester or polyester of MVG or of VGA, and
a3) a cationic photoinitiator,
and optionally
a4) a monooxetane compound, having one oxetane group, and/or
a5) a polyoxetane compound, having at least two oxetane groups,
and optionally
b) 0-49 wt% of a free-radical curable resin, further comprising
b1) a (meth)acrylate monomer or oligomer, and
b2) a free-radical photoinitiator,
wherein the weight percent is based on the total weight of the radiation curable composition.

2. A radiation curable composition according to claim 1, **characterised in that** said composition comprises 60-100 wt% of said cationic curable resin and optionally 0-40 wt% of said free-radical curable resin, or said composition comprises 80-100 wt% of said cationic curable resin and optionally 0-20 wt% of said free-radical curable resin.

3. A radiation curable composition according to claim 1, **characterised in that** said cationic curable resin comprises 20-85 wt% of said cycloaliphatic epoxide a1), 10-50 wt% of said vinyl compound a2), 2-5 wt% of said cationic photoinitiator a3), 0-30 wt% of said monooxetane a4) and 0-30 wt% of said polyoxetane a5).

4. A radiation curable composition according to claim 1, **characterised in that** said cationic curable resin comprises 20-60 wt% of said cycloaliphatic epoxide a1), 15-35 wt% of said vinyl compound a2), 2-5 wt% of said cationic photoinitiator a3), 0-20 wt% of said monooxetane a4) and 0-30 wt% of said polyoxetane a5).

5. A radiation curable composition according to claim 1, **characterised in that** said cationic curable resin comprises 70-80 wt% of said cycloaliphatic epoxide a1), 15-25 wt% of said vinyl compound a2) and 2-5 wt% of said cationic photoinitiator a3).

6. A radiation curable composition according to claim 1, **characterised in that** said cationic curable resin comprises 20-30 wt% of said cycloaliphatic epoxide a1), 15-35 wt% of said vinyl compound a2), 2-5 wt% of said cationic photoinitiator a3), 10-20 wt% of said monooxetane a4) and 20-30 wt% of said polyoxetane a5).

7. A radiation curable composition according to claim 1, **characterised in that** said vinyl compound a2) is MVG.

8. A radiation curable composition according to claim 1, **characterised in that** said cationic curable resin comprises two vinyl compounds a2).

9. A radiation curable composition according to claim 1, **characterised in that** said vinyl compound a2) is an ester or polyester of MVG, obtained by reacting MVG with an alcohol, a diol, a polyol and/or an acid or an anhydride and/or a prepolyester with pending hydroxyl or acid groups.

10. A radiation curable composition according to claim 1, **characterised in that** said vinyl compound a2) is an ester or polyester of VGA, obtained by reacting VGA with an alcohol, a diol and/or a polyol.

11. A radiation curable composition according to any of the claims 9-10, **characterised in that** said diol and/or polyol is hexanediol, 1,3-propanediol, trimethylolpropane, ethoxylated trimethylolpropane, pentaerythritol and /or di-pentaerythritol.

12. A radiation curable composition according to claim 9, **characterised in that** said acid is adipic acid and/or succinic acid.

13. A radiation curable composition according to claim 1, **characterised in that** said monooxetane a4) is 3-ethyl-3-hydroxymethyl-oxetane and said polyoxetane a5) is 3,3'oxydimethylene-bis(3-ethyl)-oxetane.

14. Use of a radiation curable composition according to any of the claims 1-13, in wood coatings, metal coatings, plastic coatings, textile coatings, paper coatings, flexographic and digital inks, 3D printing, graphic arts, adhesives, medical and dental applications and devices, absorbents, sanitary articles, packaging, electronic and electric applications and devices, and/or optical application and devices.

15. A coating, ink or adhesive comprising the radiation curable composition according to any of the claims 1-13.

16. A three-dimensional object obtained through 3D printing using the radiation curable composition according to any of the claims 1-13.

## Patentansprüche

1. Strahlungshärtbare Zusammensetzung, **dadurch gekennzeichnet, dass** die Zusammensetzung umfasst:
a) 51-100 Gew.-% eines kationisch härtbaren Harzes, ferner umfassend
a1) ein cycloaliphatisches Epoxid,
a2) mindestens eine Vinylverbindung, ausgewählt aus der Gruppe, bestehend aus Methylvinylglycolat (MVG), Vinylglycolsäure (VGA) und einem Ester oder Polyester von MVG oder VGA, und
a3) einen kationischen Photoinitiator,
und optional
a4) eine Monooxetanverbindung mit einer Oxetangruppe, und/oder
a5) eine Polyoxetanverbindung mit mindestens zwei Oxetangruppen,
und optional
b) 0-49 Gew.-% eines radikalisch härtbaren Harzes, ferner umfassend
b1) ein (Meth)acrylatmonomer oder -oligomer, und
b2) einen Radikalphotoinitiator,
wobei die Gewichtsprozente auf das Gesamtgewicht der strahlungshärtbaren Zusammensetzung bezogen sind.

2. Strahlungshärtbare Zusammensetzung gemäß Anspruch 1, **dadurch gekennzeichnet, dass** die Zusammensetzung 60-100 Gew.-% des kationisch härtbaren Harzes und optional 0-40 Gew.-% des radikalisch härtbaren Harzes umfasst, oder die Zusammensetzung 80-100 Gew.-% des kationisch härtbaren Harzes und optional 0-20 Gew.-% des radikalisch härtbaren Harzes umfasst.

3. Strahlungshärtbare Zusammensetzung gemäß Anspruch 1, **dadurch gekennzeichnet, dass** das kationisch härtbare Harz 20-85 Gew.-% des cycloaliphatischen Epoxids a1), 10-50 Gew.-% der Vinylverbindung a2), 2-5 Gew.-% des kationischen Photoinitiators a3), 0-30 Gew.-% des Monooxetans a4) und 0-30 Gew.-% des Polyoxetans a5) umfasst.

4. Strahlungshärtbare Zusammensetzung gemäß Anspruch 1, **dadurch gekennzeichnet, dass** das kationisch härtbare Harz 20-60 Gew.-% des cycloaliphatischen Epoxids a1), 15-35 Gew.-% der Vinylverbindung a2), 2-5 Gew.-% des kationischen Photoinitiators a3), 0-20 Gew.-% des Monooxetans a4) und 0-30 Gew.-% des Polyoxetans a5) umfasst.

5. Strahlungshärtbare Zusammensetzung gemäß Anspruch 1, **dadurch gekennzeichnet, dass** das kationisch härtbare Harz 70-80 Gew.-% des cycloaliphatischen Epoxids a1), 15-25 Gew.-% der Vinylverbindung a2) und 2-5 Gew.-% des kationischen Photoinitiators a3) umfasst.

6. Strahlungshärtbare Zusammensetzung gemäß Anspruch 1, **dadurch gekennzeichnet, dass** das kationisch härtbare Harz 20-30 Gew.-% des cycloaliphatischen Epoxids a1), 15-35 Gew.-% der Vinylverbindung a2), 2-5 Gew.-% des kationischen Photoinitiators a3), 10-20 Gew.-% des Monooxetans a4) und 20-30 Gew.-% des Polyoxetans a5) umfasst.

7. Strahlungshärtbare Zusammensetzung gemäß Anspruch 1, **dadurch gekennzeichnet, dass** die Vinylverbindung a2) MVG ist.

8. Strahlungshärtbare Zusammensetzung gemäß Anspruch 1, **dadurch gekennzeichnet, dass** das kationisch härtbare Harz zwei Vinylverbindungen a2) umfasst.

9. Strahlungshärtbare Zusammensetzung gemäß Anspruch 1, **dadurch gekennzeichnet, dass** die Vinylverbindung a2) ein Ester oder Polyester von MVG, erhalten durch Umsetzen von MVG mit einem Alkohol, einem Diol, einem Polyol und/oder einer Säure oder einem Anhydrid und/oder einem Präpolyester mit freien Hydroxyl- oder Säuregruppen, ist.

10. Strahlungshärtbare Zusammensetzung gemäß Anspruch 1, **dadurch gekennzeichnet, dass** die Vinylverbindung a2) ein Ester oder Polyester von VGA, erhalten durch Umsetzen von VGA mit einem Alkohol, einem Diol und/oder einem Polyol, ist.

11. Strahlungshärtbare Zusammensetzung gemäß einem der Ansprüche 9-10, **dadurch gekennzeichnet, dass** das Diol und/oder Polyol Hexandiol, 1,3-Propandiol, Trimethylolpropan, ethoxyliertes Trimethylolpropan, Pentaerythrit und/oder Dipentaerythrit ist.

12. Strahlungshärtbare Zusammensetzung gemäß Anspruch 9, **dadurch gekennzeichnet, dass** die Säure Adipinsäure und/oder Bernsteinsäure ist.

13. Strahlungshärtbare Zusammensetzung gemäß Anspruch 1, **dadurch gekennzeichnet, dass** das Monooxetan a4) 3-Ethyl-3-hydroxymethyl-oxetan ist und das Polyoxetan a5) 3,3'-Oxydimethylen-bis(3-ethyl)-oxetan ist.

14. Verwendung einer strahlungshärtbaren Zusammensetzung gemäß einem der Ansprüche 1-13 in Holzbeschichtungen, Metallbeschichtungen, Kunststoffbeschichtungen, Textilbeschichtungen, Papierbeschichtungen, Flexodruckund Digitaldrucktinten, für den 3D-Druck, in der Grafik, in Klebstoffen, medizinischen und zahnmedizinischen Anwendungen und Vorrichtungen, Absorptionsmitteln, Hygieneartikeln, Verpackungen, elektronischen und elektrischen Anwendungen und Vorrichtungen und/oder optischen Anwendungen und Vorrichtungen.

15. Beschichtung, Tinte oder Klebstoff, umfassend die strahlungshärtbare Zusammensetzung gemäß einem der Ansprüche 1-13.

16. Dreidimensionales Objekt, erhalten durch 3D-Drucken unter Verwendung der strahlungshärtbaren Zusammensetzung gemäß einem der Ansprüche 1-13.

## Revendications

1. Composition durcissable par rayonnement, **caractérisée en ce que** la composition comprend :
a) 51 à 100 % en poids d'une résine durcissable cationique, comprenant en outre
a1) un époxyde cycloaliphatique,
a2) au moins un composé de vinyle, sélectionné parmi le groupe constitué du glycolate de méthyle et de vinyle (MVG), de l'acide glycolique de vinyle (VGA) et d'un ester ou d'un polyester de MVG ou de VGA, et
a3) un photoinitiateur cationique,
et facultativement
a4) un composé de mono-oxétane, présentant un groupe oxétane, et/ou
a5) un composé de polyoxétane, présentant au moins deux groupes oxétane,
et facultativement
b) 0 à 49 % en poids d'une résine durcissable par radicaux libres, comprenant en outre
b1) un monomère ou un oligomère de (méth)acrylate, et
b2) un photoinitiateur de radicaux libres,
dans laquelle le pourcentage en poids est basé sur le poids total de la composition durcissable par rayonnement.

2. Composition durcissable par rayonnement selon la revendication 1, **caractérisée en ce que** ladite composition comprend 60 à 100 % en poids de ladite résine durcissable cationique et facultativement 0 à 40 % en poids de ladite résine durcissable par radicaux libres, ou ladite composition comprend 80 à 100 % en poids de ladite résine durcissable cationique et facultativement 0 à 20 % en poids de ladite résine durcissable par radicaux libres.

3. Composition durcissable par rayonnement selon la revendication 1, **caractérisée en ce que** ladite résine durcissable cationique comprend 20 à 85 % en poids dudit époxyde cycloaliphatique a1), 10 à 50 % en poids dudit composé de vinyle a2), 2 à 5 % en poids dudit photoinitiateur cationique a3), 0 à 30 % en poids dudit mono-oxétane a4) et 0 à 30 % en poids dudit polyoxétane a5).

4. Composition durcissable par rayonnement selon la revendication 1, **caractérisée en ce que** ladite résine durcissable cationique comprend 20 à 60 % en poids dudit époxyde cycloaliphatique a1), 15 à 35 % en poids dudit composé de vinyle a2), 2 à 5 % en poids dudit photoinitiateur cationique a3), 0 à 20 % dudit mono-oxétane a4) et 0 à 30 % en poids dudit polyoxétane a5).

5. Composition durcissable par rayonnement selon la revendication 1, **caractérisée en ce que** ladite résine durcissable cationique comprend 70 à 80 % en poids dudit époxyde cycloaliphatique a1), 15 à 25 % en poids dudit composé de vinyle a2) et 2 à 5 % en poids dudit photoinitiateur cationique a3).

6. Composition durcissable par rayonnement selon la revendication 1, **caractérisée en ce que** ladite résine durcissable cationique comprend 20 à 30 % en poids dudit époxyde cycloaliphatique a1), 15 à 35 % en poids dudit composé de vinyle a2), 2 à 5 % en poids dudit photoinitiateur cationique a3), 10 à 20 % en poids dudit mono-oxétane a4) et 20 à 30 % en poids dudit polyoxétane a5).

7. Composition durcissable par rayonnement selon la revendication 1, **caractérisée en ce que** ledit composé de vinyle a2) est le MVG.

8. Composition durcissable par rayonnement selon la revendication 1, **caractérisée en ce que** ladite résine durcissable cationique comprend deux composés de vinyle a2).

9. Composition durcissable par rayonnement selon la revendication 1, **caractérisée en ce que** ledit composé de vinyle a2) est un ester ou un polyester de MVG, obtenu par réaction du MVG avec un alcool, un diol, un polyol et/ou un acide ou un anhydride et/ou un prépolyester avec des groupes hydroxyle ou acide en attente.

10. Composition durcissable par rayonnement selon la revendication 1, **caractérisée en ce que** ledit composé de vinyle a2) est un ester ou un polyester de VGA, obtenu par réaction du VGA avec un alcool, un diol et/ou un polyol.

11. Composition durcissable par rayonnement selon l'une quelconque des revendications 9 et 10, **caractérisée en ce que** lesdits diol et/ou polyol sont l'hexanediol, le 1,3-propanediol, le triméthylpropane, le triméthylpropane éthoxylé, le pentaérythritol et/ou le di-pentaérythritol.

12. Composition durcissable par rayonnement selon la revendication 9, **caractérisée en ce que** ledit acide est l'acide adipique et/ou l'acide succinique.

13. Composition durcissable par rayonnement selon la revendication 1, **caractérisée en ce que** ledit mono-oxétane a4) est le 3-éthyl-3-hydroxyméthyloxétane et ledit polyoxétane a5) est le 3,3'-oxydiméthylène-bis(3-éthyl)-oxétane.

14. Utilisation d'une composition durcissable par rayonnement selon l'une quelconque des revendications 1 à 13, dans des revêtements de bois, des revêtements de métal, des revêtements de plastique, des revêtements de textile, des revêtements de papier, des encres flexographiques et numériques, une impression 3D, des arts graphiques, des adhésifs, des applications et dispositifs médicaux et dentaires, des absorbants, des articles sanitaires, des emballages, des applications et dispositifs électroniques et électriques et/ou des applications et dispositifs optiques.

15. Revêtement, encre ou adhésif comprenant la composition durcissable par rayonnement selon l'une quelconque des revendications 1 à 13.

16. Objet tridimensionnel obtenu par impression 3D à l'aide de la composition durcissable par rayonnement selon l'une quelconque des revendications 1 à 13.
